# EUROPEAN PATENT APPLICATION

(11) **EP 2 765 675 A1**
(43) Date of publication of application: **13.08.2014**
(21) Application number: 13161895.1
(22) Date of filing: 30.03.2013
(51) Int. Cl.: H02J 7/00, H02J 7/04, H02J 3/14

(54) **Electronic apparatus charging base and power-supply control method thereof**

(30) Priority: 08.02.2013 TW 102105442
(71) Applicant: Gunitech Corp., Hsinchu County 307 (TW)
(72) Inventor: Chang, Wen-Hsin, 307 County Qionlin Township Hsinchu (TW); Hung, Chien-Ju, 307 County Qionlin Township Hsinchu (TW); Zhao, Enoch, 307 County Qionlin Township Hsinchu (TW)
(74) Representative: Altenburg, Bernardus Stephanus Franciscus

(57) **Abstract**

An electronic apparatus charging base (1) is disclosed. The electronic apparatus charging base (1) is provided for charging at least one electronic apparatus (90) and can be electrically connected to an external power source (80). The electronic apparatus charging base (1) includes a base (10), a battery (30), and a control system (40). The base (10) includes at least one socket (11) used for connecting electrically to the electronic apparatus (90). The battery (30) is electrically connected to the socket (11). The control system (40) is electrically connected to the external power source (80) and the battery (30) and is used for monitoring the quantity of electricity in the battery (30) and controlling the external power source (80) to charge the electronic apparatus (90) or the battery (30), or for controlling the battery (30) to charge the electronic apparatus (90).

## Description

### Field

The present invention relates to an electronic apparatus charging base. More specifically, the present invention relates to an electronic apparatus charging base which can charge an electronic apparatus.

### Background

With the development of technology, the portable electronic apparatus is a major focus of the development of hi-tech products. Because such an apparatus is easy to carry and use, the portable electronic apparatus is becoming the first choice of consumers. Currently, if the user is using a mobile phone outdoors and the electricity is exhausted, the user either changes the battery or is forced to turn off the mobile phone. If the user is talking on the phone at this time, then the user has to stop talking on the phone, which is very inconvenient to the user.

In order to improve the aforementioned disadvantages, a mobile power apparatus has been invented. The mobile power apparatus can provide power to the portable electronic apparatus when the power of the portable electronic apparatus is almost exhausted, and the inconvenience of changing the battery can be avoided. Generally speaking, when the mobile apparatus is out of power, it is charged through a plug connected to a socket providing market electricity. However, if the user has to charge several mobile power apparatuses or other electronic apparatuses at the same time, a corresponding number of sockets must be found. If the number of sockets is insufficient, the charging demands of the user will not be satisfied and inconvenience will be caused to the user. In addition, the charging is mostly executed during off-peak hours of charging for the use of market electricity, and thus the cost of the electricity is higher.

Therefore, a new charging base has to be invented to improve the aforementioned disadvantages.

### Summary

The main object of the present invention is to provide an electronic apparatus charging base and a power-supply control method thereof which can change the power-supply mode.

In order to achieve the above objects, the electronic apparatus charging base of the present invention can be used to charge at least one electronic apparatus, and the electronic apparatus charging base can be electrically connected to an external power source. The electronic apparatus charging base comprises a base, a battery, and a control system. The base comprises at least one socket, and the at least one socket is electrically connected to the at least one electronic apparatus. The battery is electrically connected to the socket. The control system is electrically connected with the external power source and the battery and is used for monitoring quantity of electricity in the battery and controlling the external power source to charge the electronic apparatus or the battery, or for controlling the battery to charge the electronic apparatus.

The power-supply control method of the present invention is adapted to the electronic apparatus charging base. The electronic apparatus charging base is provided for charging at least one electronic apparatus and is able to be electrically connected to an external power source. The electronic apparatus charging base comprises at least one socket and a battery. The power-supply control method of the present invention comprises the following steps: determining whether the time is in a predetermined time; if yes, controlling the external power source to stop charging the electronic apparatus, and controlling the battery to charge the at least one electronic apparatus; and if no, controlling the external power source to charge the electronic apparatus or the battery.

### Brief description of the drawings

The present invention will be understood more fully from the detailed description given below and from the accompanying drawings of the invention, which, however, should not be taken to limit the invention to the specific embodiment, but are for explanation and understanding only.
Figure 1 is an apparatus structure diagram of the electronic apparatus charging base in accordance with the present invention.
Figure 2 is a process flow chart of the power-supply control method in accordance with the present invention.

### Detailed Description

To facilitate understanding and to clarify the object, characteristics and advantages of the present invention, the following specific embodiment and figures illustrating the present invention are presented to provide a detailed description.

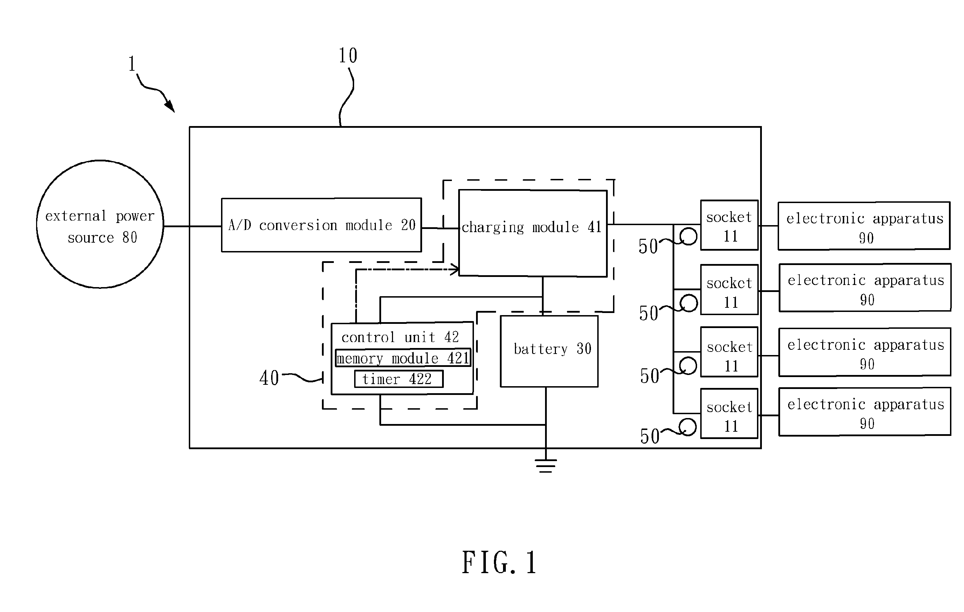

Please first refer to FIG. 1, which is an apparatus structure diagram of the electronic apparatus charging base in accordance with the present invention.

As shown in FIG. 1, in one embodiment of the present invention, the electronic apparatus charging base 1 of the present invention can charge a plurality of electronic apparatuses 90. In the specific embodiment of the present invention, the electronic apparatus 90 can be a mobile power apparatus, but the present invention is not limited to this example; the electronic apparatus 90 can also be a mobile phone, a video game machine, or other household appliances.

The electronic apparatus charging base 1 can be electrically connected with an external power source 80 and thereby use the external power source 80 to charge the electronic apparatus 90. In one embodiment of the present invention, the electronic apparatus charging base 1 comprises a base 10, an A/D conversion module 20, a battery 30, a control system 40, and a plurality of indicating devices 50.

In one embodiment of the present invention, the base 10 comprises a plurality of sockets 11, and each socket 11 is electrically connected to the electronic apparatus 90. In the specific embodiment of the present invention, the socket 11 can be a Universal Serial Bus (USB) or a Micro Universal Serial Bus (Micro-USB), but the present invention is not limited to the above examples.

In one embodiment of the present invention, the A/D conversion module 20 is electrically connected to the external power source 80 and is used for converting the AC current provided by the external power source 80 to the DC current.

In one embodiment of the present invention, the battery 30 is electrically connected to each socket 11. The battery 30 can be used for charging each socket 11 and thereby for charging the electronic apparatus 90 connected with each socket 11.

In one embodiment of the present invention, the control system 40 comprises a charging module 41 and a control unit 42. The charging module 41 is electrically connected to the A/D conversion module 20 and is used for transmitting the current generated by the external power source 80 to the electronic apparatus 90 or to the battery 30, thereby charging the electronic apparatus 90 or the battery 30 by the external power source 80, or for transmitting the current generated by the battery 30 to the electronic apparatus 90, thereby charging the electronic apparatus 90 by the battery 30. The control unit 42 is electrically connected to the charging module 41 and the battery 30 and is used for monitoring the quantity of electricity in the battery 30 and controlling the charging module 41; thus, the charging module 41 is able to control the external power source 80 to charge the battery 30 or the electronic apparatus 90 or to control the battery 30 to charge the electronic apparatus 90. In one embodiment of the present invention, the control unit comprises a memory module 421 and a timer 422; a time parameter is stored in the memory module 421 so that the control system 40 can control the external power source 80 or the battery 30 to charge the electronic apparatus 90 according to the time parameter; the timer 422 is used for measuring time. In the specific embodiment of the present invention, the charging module 41 comprises at least two electric-controlled switches, each electric-controlled switch is used for turning on or cutting off the charging current path when charging the electronic apparatus 90 or the battery 30, and the control unit 42 is a battery management system, but the charging module 41 and the control unit 42 are not limited to the above examples.

The plurality of indicating devices 50 are disposed on the base 10 and are configured corresponding to each socket 11. Each indicating device 50 is used for generating a first indicating signal when the corresponding socket 11 electronically connects to the electronic apparatus 90, and for generating a corresponding indicating signal when the quantity of electricity in the electronic apparatus 90 achieves a setting value of each level; thus the user is informed about the quantity of electricity in the electronic apparatus 90 by the indicating device 50. In the specific embodiment of the present invention, the indicating device 50 is a light emitting diode (LED), but the present invention is not limited to the above example.

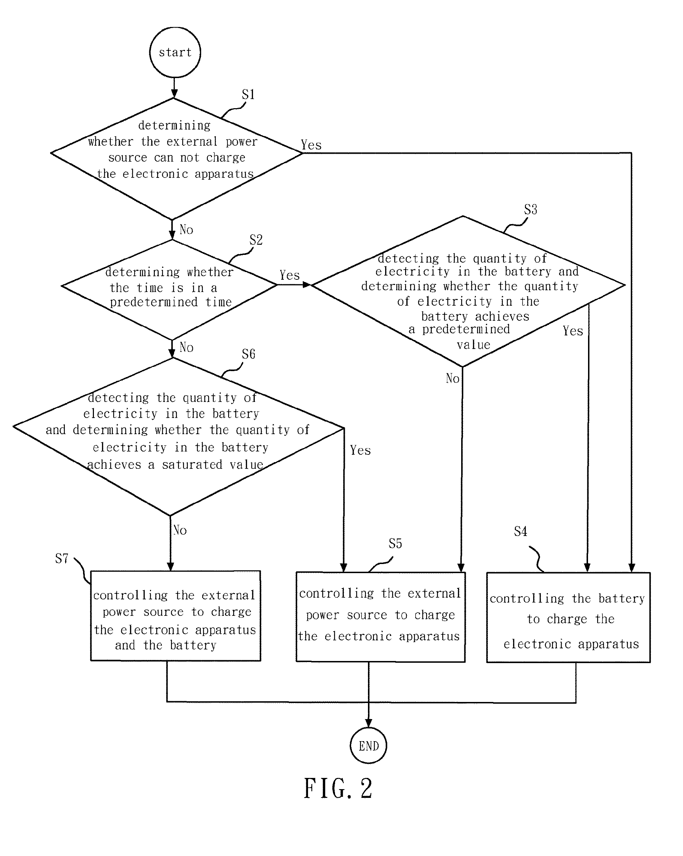

Finally, please refer to FIG. 1 and FIG. 2 together. FIG. 2 is a process flow chart of the power-supply control method in accordance with the present invention. In the following, FIG. 1 will be used to explain each of the steps in FIG. 2. It must be noted here that although the following paragraph uses the aforementioned electronic apparatus charging base 1 as an example to interpret the power-supply control method disclosed in the present invention, the method is not limited to being used on the aforementioned electronic apparatus charging base 1.

First, perform step S1: determining whether the external power source can not charge the electronic apparatus.

As shown in FIG. 1 and FIG. 2, in one embodiment of the present invention, the control system 40 of the electronic apparatus charging base 1 in accordance with the present invention will monitor the power supply situation of the external power source 80 at any time. If the external power source 80 can not supply the power normally (for example, during a power outage), or if the external power source 80 is not electrically connected to the electronic apparatus charging base 1, in order not to break off the supplying of power, the control system 40 will control the battery 30 to charge the electronic apparatus 90 at this time; i.e., the process will perform step S4.

Next, perform step S2: determining whether the time is in a predetermined time.

In one embodiment of the present invention, the memory module 421 of the control unit 42 will store a time parameter, which can be entered by the user or can be predetermined. The time parameter can include a start time and an end time. In the embodiment of the present invention, the start time is set to 8:00 A.M., and the end time is set to 10:00 P.M, but the present invention is not limited to the above examples. After the memory module 421 stores the time parameter, the control system 40 can control the external power source 80 or the battery 30 to charge the electronic apparatus 90 according to the time parameter. Therefore, when it is confirmed that the external power source 80 can supply the power normally, and before determination of whether the power should be supplied by the external power source 80 or by the battery 30, the control unit 42 will determine whether the start time or the end time set in the time parameter has arrived; i.e, it will determine whether the time is during the predetermined time span.

Perform step S3: detecting the quantity of electricity in the battery and determining whether the quantity of electricity in the battery achieves a predetermined value.

In one embodiment of the present invention, when the time is during the predetermined time span, the control system 40 will determine whether the quantity of electricity in the battery is in a state suitable for being charged. If the quantity of electricity in the battery does not achieve the predetermined value (for example, 10% of the total capacity), it is not suitable to use the battery 30 to charge the electronic apparatus 90; thus the control system 40 will control the external power source 80 to charge the electronic apparatus 90; i.e., the process will perform step S5. On the other hand, if the quantity of electricity in the battery does achieve the predetermined value, then the process will perform step S4.

Perform step S4: controlling the battery to charge the electronic apparatus.

In one embodiment of the present invention, if the time is during the predetermined time span delineated by the time parameter (e.g., 8:00 AM to 10:00 PM), and if the quantity of electricity in the battery 30 does achieve the predetermined value, the control system 40 will control the external power source 80 to stop charging the electronic apparatus 90 and the battery 30 and control the battery 30 to charge the electronic apparatus 90 because the time is an electricity-consumption peak time and thus the cost can be lowered. In addition, as mentioned before, if the external power source 80 can not normally charge the electronic apparatus 90, then whether or not the time is during the predetermined time span, the control system 40 will control the battery 30 to charge the electronic apparatus 90.

Perform step S5: controlling the external power source to charge the electronic apparatus.

As mentioned above, if the quantity of electricity in the battery 30 does not achieve the predetermined value, it is not suitable to use the battery 30 for charging. Therefore, even if the time is during the predetermined time span, then when the quantity of electricity in the battery 30 does not achieve the predetermined value, the control system 40 will still control the external power source 80 to charge the electronic apparatus 90.

Perform step S6: detecting the quantity of electricity in the battery and determining whether the quantity of electricity in the battery achieves a saturated value.

When the time is not during the predetermined time span and the external power source 80 can normally charge the electronic apparatus 90, the control system 40 will further detect the quantity of electricity in the battery 30 and determine whether the quantity of electricity in the battery 30 achieves a saturated value (i.e. if the quantity of electricity in the battery 30 matches the total capacity); if the quantity of electricity in the battery 30 achieves the saturated value, then the control system 40 will control the external power source 80 to merely charge the electronic apparatus 90; i.e., the process will perform the aforementioned step 5. On the other hand, if the quantity of electricity in the battery 30 is not full, then the control system 40 will control the external power source 80 to charge the electronic apparatus 90 and the battery 30 at the same time; i.e., the process will perform step 7.

It must be noted here that the power-supply control method disclosed in the present invention is not limited to the sequence of the aforementioned steps and that the sequence of the aforementioned steps can be modified in order to achieve the object of the present invention.

According to the above description, the electronic apparatus charging base and the power-supply control method thereof in accordance with the present invention can provide different power supply modes (i.e., a market electricity power supply mode and a battery electricity power supply mode) according to different times, and therefore achieve the object of lowering the cost. In addition, by the plurality of sockets 11 disposed on the charging base, a plurality of electronic apparatuses 90 can be charged at the same time. When an emergent situation happens, the indicating device can be used to provide the electronic apparatus having the greatest quantity of electricity for acts of rescue or taking refuge, and thus solve the problem of the prior arts effectively.

In summary, regardless of the function, the way and result of the present invention are shown to have technical characteristics different from those of the prior art. However, the aforementioned embodiments are just for illustrating the principle and the result of the present invention and are not intended to limit the range of the present invention. It will be obvious to those skilled in the art that, based upon the description herein, changes and modifications may be made without departing from this invention and its broader aspects. Therefore, the appended claims are intended to encompass within their scope all such changes and modifications as are within the true spirit and scope of the exemplary embodiment of the present invention.

## Claims

1. An electronic apparatus charging base (1) for charging at least one electronic apparatus (90); the electronic apparatus charging base (1) can be electrically connected with an external power source (80), the electronic apparatus charging base (1) comprising:
a base (10), comprising at least one socket (11) used for being electrically connected to the electronic apparatus (90);
a battery (30), electrically connected with the at least one socket (11); and
a control system (40), electrically connected with the external power source (80) and the battery (30), for monitoring the quantity of electricity in the battery (30) and controlling the external power source (80) to charge the at least one electronic apparatus (90) or
the battery (30), or controlling the battery (30) to charge the at least one electronic apparatus (90).

2. The electronic apparatus charging base (1) as claimed in claim 1, wherein the base (10) further comprises an indicator device (50), and the indicator device (50) is used for generating a first indicating signal when the at least one socket (11) electrically connects to the at least one electronic apparatus (90), and for generating a corresponding indicating signal when the quantity of electricity in the at least one electronic apparatus (90) achieves a corresponding setting value.

3. The electronic apparatus charging base (1) as claimed in claim 1, wherein the control system (40) comprises a memory module (421) and a timer (422), and a time parameter is stored in the memory module (421) such that the control system (40) controls the external power source (80) or the battery (30) to charge the at least one electronic apparatus (90) according to the time parameter, wherein when the time is during a predetermined time span delineated by the time parameter, the control system (40) controls the external power source (80) to stop charging the at least one electronic apparatus (90) or the battery (30), and the control system (40) controls the battery (30) to charge the at least one electronic apparatus (90).

4. The electronic apparatus charging base (1) as claimed in claim 3, wherein the base (10) further comprises an indicator device (50), and the indicator device (50) is used for generating a first indicating signal when the at least one socket (11) electrically connects to the at least one electronic apparatus (90), and for generating a corresponding indicating signal when the quantity of electricity in the at least one electronic apparatus (90) achieves a corresponding setting value.

5. The electronic apparatus charging base (1) as claimed in claim 3, wherein when the time is during the predetermined time span and the quantity of electricity in the battery (30) does not achieve a predetermined value, the control system (40) controls the battery (30) to stop charging the at least one electronic apparatus (90), and the control system (40) controls the external power source (80) to charge the at least one electronic apparatus (90).

6. The electronic apparatus charging base (1) as claimed in claim 5, wherein the base (10) further comprises an indicator device (50), and the indicator device (50) is used for generating a first indicating signal when the at least one socket (11) electrically connects to the at least one electronic apparatus (90), and for generating a corresponding indicating signal when the quantity of electricity in the at least one electronic apparatus (90) achieves a corresponding setting value.

7. The electronic apparatus charging base (1) as claimed in claim 3, wherein when the time is not during the predetermined time span and the external power source (80) can not charge the at least one electronic apparatus (90), the control system (40) controls the battery (30) to charge the at least one electronic apparatus (90).

8. The electronic apparatus charging base (1) as claimed in claim 7, wherein the base (10) further comprises an indicator device (50), and the indicator device (50) is used for generating a first indicating signal when the at least one socket (11) electrically connects to the at least one electronic apparatus (90), and for generating a corresponding indicating signal when the quantity of electricity in the at least one electronic apparatus (90) achieves a corresponding setting value.

9. The electronic apparatus charging base (1) as claimed in claim 3, wherein when the time is not during the predetermined time span and the quantity of electricity in the battery (30) achieves a saturated value, the control system (40) controls the external power source (80) to charge the at least one electronic apparatus (90) and to stop charging the battery (30).

10. The electronic apparatus charging base (1) as claimed in claim 9, wherein the base (10) further comprises an indicator device (50), and the indicator device (50) is used for generating a first indicating signal when the at least one socket (11) electrically connects to the at least one electronic apparatus (90), and for generating a corresponding indicating signal when the quantity of electricity in the at least one electronic apparatus (90) achieves a corresponding setting value.

11. A power-supply control method, adapted to an electronic apparatus charging base (1) for charging at least one electronic apparatus (90); the electronic apparatus charging base (1) can be electrically connected with an external power source (80), and the electronic apparatus charging base (1) comprises at least one socket (11) and a battery (30), the power-supply control method comprising the following steps:
determining whether the time is in a predetermined time;
if yes, controlling the external power source (80) to stop charging the at least one electronic apparatus (90), and controlling the battery (30) to charge the at least one electronic apparatus (90); and
if no, controlling the external power source (80) to charge the at least one electronic apparatus (90) or the battery (30).

12. The method as claimed in claim 11, wherein when the time is during the predetermined time span, then before the step of controlling the battery (30) to charge the at least one electronic apparatus (90), the method further comprises the following steps:
detecting the quantity of electricity in the battery (30) and determining whether the quantity of electricity in the battery (30) achieves a predetermined value;
if yes, controlling the external power source (80) to stop charging the at least one electronic apparatus (90), and controlling the battery (80) to charge the at least one electronic apparatus (90); and
if no, controlling the external power source (80) to charge the at least one electronic apparatus (90).

13. The method as claimed in claim 11, wherein before the step of determining whether the time is during the predetermined time span, the method further comprises the following steps:
determining whether the external power source (80) can not charge the at least one electronic apparatus (90);
if no, determining whether the time is during the predetermined time span; and
if yes, controlling the battery (30) to charge the at least one electronic apparatus (90).

14. The method as claimed in claim 13, wherein before the step of controlling the external power source (80) to charge the at least one electronic apparatus (90) or the battery (30), the method further comprises the following steps:
detecting the quantity of electricity in the battery (30) and determining whether the quantity of electricity in the battery (30) achieves a saturated value;
if yes, controlling the external power source (80) to charge the at least one electronic apparatus (90) and to stop charging the battery (30); and
if no, controlling the external power source (80) to charge the at least one electronic apparatus (90) and the battery (30).

15. The method as claimed in claim 11, wherein before the step of controlling the external power source (80) to charge the at least one electronic apparatus (90) or the battery (30), the method further comprises the following steps:
detecting the quantity of electricity in the battery (30) and determining whether the quantity of electricity in the battery (30) achieves a saturated value;
if yes, controlling the external power source (80) to charge the at least one electronic apparatus (90) and to stop charging the battery (30); and
if no, controlling the external power source (80) to charge the at least one electronic apparatus (90) and the battery (30).
